Europäisches Patentamt

(19) European Patent Office

Office européen des brevets

(11) Veröffentlichungsnummer : **0 290 447**
**B1**

(12) **EUROPÄISCHE PATENTSCHRIFT**

(45) Veröffentlichungstag der Patentschrift :
**02.11.89**

(21) Anmeldenummer : **87900776.3**

(22) Anmeldetag : **29.01.87**

(86) Internationale Anmeldenummer :
**PCT/AT 87/00004**

(87) Internationale Veröffentlichungsnummer :
**WO/8704830 (13.08.87 Gazette 87/18)**

(51) Int. Cl.⁴ : **G 06 F 15/62, G 06 F 15/68**

(54) **VORRICHTUNG ZUR GEWINNUNG TOMOGRAPHISCHER RÖNTGENBILDER.**

(30) Priorität : **30.01.86 AT 227/86**

(43) Veröffentlichungstag der Anmeldung :
**17.11.88 Patentblatt 88/46**

(45) Bekanntmachung des Hinweises auf die Patenterteilung : **02.11.89 Patentblatt 89/44**

(84) Benannte Vertragsstaaten :
**AT BE CH DE FR GB IT LI NL SE**

(56) Entgegenhaltungen :
**GB—A— 2 020 939**
**US—A— 4 079 417**
**US—A— 4 379 329**
**IEEE Transactions on Biomedical Engineering, vol BME-26, no 5, May 1979 (IEEE New York US), J W Strohbehn et al.:"image enhancement of conventional transverseaxial tomograms", pages 253-262**

(73) Patentinhaber : **ART BICKFORD & CO. GESELLSCHAFT M.B.H.**
**Neunkirchnerstrasse 117-119**
**A-2700 Wiener Neustadt (AT)**

(72) Erfinder : **NOWAK, Kurt**
**Hauptstrasse 2**
**A-7023 Zemendorf (AT)**

(74) Vertreter : **Brauneiss, Leo, Patentanwälte Dipl.-Ing. et al**
**Strohgasse 10**
**A-1030 Wien (AT)**

**Beschreibung**

Die Erfindung bezieht sich auf eine Vorrichtung zur Gewinnung tomographischer Röntgenbilder mit verbesserten Kontrasteigenschaften, mit einer Röntgenquelle, deren Strahlung nach Passieren des Objektes von einem Empfänger aufgefangen und mittels eines Bildwandlers in der Röntgenstrahlung bildpunktweise entsprechende elektrische Bildsignale von Ausgangsbildern umgesetzt wird, die über eine elektronische Schaltung einer Bilddarstellungseinrichtung, z. B. einem Monitor od. dgl., zugeführt werden, wobei eine Mechanik während der Bestrahlung eine tomographische Relativbewegung zwischen Empfänger und Röntgenquelle bewirkt.

Bekanntlich lassen sich durch tomographische Methoden bei Röntgenaufnahmen einzelne Körperschichten zur Darstellung bringen, wobei die Tiefe und Dicke jeder Körperschicht einstellbar ist und alle anderen Körperschichten dabei unscharf dargestellt werden. Zumeist werden Schichten parallel zur Längsachse des Körpers (Objektes) aufgenommen. Nachteilig bei den bekannten Aufnahmeverfahren ist, daß der Einfluß jener Kontraste nicht völlig vermieden werden kann, welche von den starken Schatten anderer, d. h. nicht zur Aufnahmeebene gehöriger Schichten herrühren, wenn der Durchmesser dieser Schatten größer als der Bewegungsbereich der Mechanik für die Durchführung der tomographischen Bewegung ist. Es werden sogar kleinere störende Schatten in Form das wahre Bild verzerrender Flecken abgebildet, wenn nur ein Konturteil des Schattens einen Kurvenverlauf hat, der jenem der tomographischen Bewegung ähnelt. Kontrast und Auflösung der mittels bisher üblicher Vorrichtungen erzielten Bilder sind daher nicht zufriedenstellend. Man hat versucht, diese Nachteile durch komplizierte tomographische Bewegungen zu vermeiden, was jedoch nicht zum gewünschten Erfolg geführt hat. Zudem besteht bei den bekannten Verfahren der Nachteil, daß die verwendete Röntgenstrahlendosis verhältnismäßig hoch ist, da die Aufzeichnungen mit radiographischen Strahlendosen durchgeführt werden müssen. Dies gilt auch für die bekannte Methode der Computertomographie, insbesondere dann, wenn ein Längsschnitt mittels Rechnern aus einer Vielzahl von Querschnitten errechnet wird. Ein gemeinsamer Nachteil der Computertomographiesysteme besteht in der relativ hohen Kosten. Die Methode der sogenannten « indirekten Tomographie » verwendet Bildverstärker in Kombination mit üblichen tomographischen Systemen, um vor der Integration der Bilder auf einen Film reduzierten Formates eine Verstärkung der Lichtintensität der Signale zu erzielen. Es hat sich gezeigt, daß auch hiedurch keine Verbesserung der Bildqualität erzielbar ist.

Aus der US-A-4 079 417 und aus der Literaturstelle IEEE TRANSACTIONS ON BIOMEDICAL ENGENEERING (Band BME-26, Nr. 5, Mai 1979, Seiten 253-262) ist eine Methode zur Vergrößerung des Kontrastes zwischen in einem wählbaren Grauwertbereich liegenden Bildpunkten bzw. eine Kontrastvergrößerung durch Abflachung des Grauwert-Histogramms bekannt geworden, jedoch befriedigen auch diese Vorgangsweisen nicht.

Die Erfindung setzt sich zur Aufgabe, diese Nachteile bekannter tomographischer Verfahren und Vorrichtungen zu vermeiden und eine Vorrichtung zu schaffen, mit welcher tomographische Bilder verbesserter Kontrasteigenschaften mit vergleichsweise geringem Aufwand erzielbar sind, wobei nur geringe Strahlendosen bei der Aufzeichnung der Bilder erforderlich sind. Die Erfindung löst diese Aufgabe — ausgehend von einer Vorrichtung der eingangs beschriebenen Art — dadurch, daß die elektronische Schaltung eine Auswertungsschaltung für den über mehrere Ausgangsbilder wiederholten Kontrastvergleich zwischen einander benachbarten Bildpunkten und zur statistischen Erfassung der einzelnen Kontrastvergleiche hat, wobei in der Auswertungsschaltung durch diese statistische Erfassung die Wahrscheinlichkeit des Auftretens von Kontrasten bestimmter Vorzeichen zwischen einander benachbarten Bildpunkten bestimmt wird, und daß eine Transformationsschaltung zur Änderung der Ausgangsbildsignale in Abhängigkeit von den von der Auswertungsschaltung gelieferten Signalen vorgesehen ist, mittels welcher Transformationsschaltung Bildpunktpaare für weitere Kontrasterhöhung ausgewählt werden, für welche die Kontrastvorzeichen mit den Vorzeichen größter Wahrscheinlichkeit übereinstimmen, wobei der Ausgang dieser Transformationsschaltung an die Bilddarstellungseinrichtung angeschlossen ist. Dadurch gelingt es, tomographische Röntgenbilder mit wesentlich verbesserten Kontrasteigenschaften zu gewinnen, d. h. den Einfluß der eingangs erwähnten Störungen wesentlich zu reduzieren bzw. sogar gänzlich zu vermeiden. Der Aufwand ist hiebei vergleichsweise gering, da die benötigte Auswertungsschaltung und die Transformationsschaltung aus üblichen Bauteilen zusammengesetzt werden können, so daß auf Sonderanfertigungen weitgehend verzichtet werden kann. Außerdem ist es mit der erfindungsgemäßen Vorrichtung möglich, die Röntgenstrahlung auf fluoroskopische Dosen zu reduzieren, ohne an Bildqualität zu verlieren. Dadurch werden der Patient und das Bedienungspersonal bei der Durchführung der Röntgenbestrahlung weniger belastet.

Bei der erfindungsgemäßen Vorrichtung findet in der Auswertungsschaltung ein wiederholter Kontrastvergleich statt, d. h. eine Auswertung der Kontrastinformation der Ausgangsbilder, welche während der tomographischen Bewegung der Röntgeneinrichtung aufgezeichnet werden. Durch den, vorzugsweise über viele, gegebenenfalls alle, Ausgangsbilder wiederholten Kontrastvergleich wird festgestellt, ob ein bestimmter Kontrast in der Serie der Ausgangsbilder wiederholt, insbesondere in einem Großteil der Ausgangsbilder aufscheint. Es ist hiebei zweckmäßig, die Kontraste zwischen einander angrenzenden Bildpunkten zu verwenden, jedoch wäre es auch sinnvoll denkbar, Kontrastvergleiche, z. B. zwischen jeweils zwei Bildpunkten durchzuführen, die voneinander durch einen oder gegebenenfalls auch mehrere dazwischenliegende Bildpunkte getrennt sind. Dieser Kontrastvergleich gründet sich auf der theoretischen Erkenntnis, daß die Konstraste, welche der gerade untersuchten Schicht angehören, ihre Lage und ihr Vorzeichen während der tomographischen Bewegung, die ja verhältnismäßig kurzzeitig ist, nicht ändern. Um diese « wahren » Kontraste aufzufinden, wird bei der Erfindung also zunächst ein Vergleich der Vorzeichen und der Lage der Kontraste in den Ausgangsbildern durchgeführt. Hiebei ist eine weitere Erkenntnis von Wichtigkeit, nämlich daß der Kontrastwert im Ausgangsbild nicht so wichtig ist wie das Vorzeichen des Kontrastes. Wenn also z. B. ein bestimmtes Vorzeichen des Kontrastes für ein bestimmtes Bildpunktpaar in allen Ausgangsbildern oder in der klaren Mehrheit der verfügbaren Ausgangsbilder wiederkehrt, dann kann das Vorhandensein dieses Kontrastes in der untersuchten Schicht als sicher angenommen werden. Die Genauigkeit dieser statistischen Analyse steigt mit steigender Anzahl der Ausgangsbilder, wobei es sich gezeigt hat, daß schon etwa 100 Ausgangsbilder zur Erzielung zufriedenstellender Resultate genügen.

Anschließend an die statistische Erfassung der Kontrastvergleiche findet in der erfindungsgemäßen Vorrichtung eine Transformation der Ausgangsbilder unter Zuhilfenahme der bei der erwähnten statistischen Erfassung der Kontrastvergleiche gewonnenen Information statt. Mit anderen Worten: Es werden die während der tomographischen Bewegung aufgezeichneten Ausgangsbilder unter Zuhilfenahme der über die Kontrastvergleiche gewonnenen zusätzlichen Informationen verbessert. Es hat sich gezeigt, daß die Qualität der Ausgangsbilder hiedurch ganz wesentlich verbessert werden kann, undzwar unter Zuhilfenahme verhältnismäßig einfacher Schaltungsteile.

Gemäß einer bevorzugten Ausführungsform der Erfindung hat die Auswertungsschaltung zumindest zwei Speicher für die getrennte Speicherung und Auswertung der ursprünglichen Bildsignale, welche während der tomographischen Bewegung in zumindest zwei einander kreuzenden Abschnitten dieser Bewegung, vorzugsweise in zwei aufeinander normal verlaufenden Abschnitten, erzeugt werden. Durch diese Aufteilung der tomographischen Bewegung in zumindest zwei in unterschiedlichen Richtungen durchgeführten Aufzeichnungsabschnitten läßt sich die statistische Kontrastauswertung wesentlich verbessern. Im allgemeinen ist aus Gründen des Aufwandes die Bewegung in zwei unterschiedlichen, vorzugsweise aufeinander senkrechten, Richtungen ausreichend, es wäre jedoch denkbar, auch mehr als zwei unterschiedliche Bewegungsrichtungen bei der tomographischen Bewegung zu verwenden. Die beiden Richtungen der tomographischen Bewegung, im folgenden die X- bzw. Y-Richtung genannt, können, aber müssen nicht, mit den Achsen des Objektes übereinstimmen. Wesentlich ist hiebei lediglich, daß die während der Bewegung in X-Richtung gewonnenen Ausgangsbilder getrennt von den während der Bewegung in Y-Richtung gewonnenen Ausgangsbilder zur statistischen Kontrastauswertung herangezogen werden, so daß also zwei voneinander unabhängige statistische Konstrastvergleiche durchgeführt werden, die dann gemeinsam in der Transformationsschaltung zur Verbesserung der Ausgangsbildsignale herangezogen werden können. Dies trägt wesentlich zur Verbesserung der Bildqualität durch Eliminierung der Einflüsse anderer, nicht zur untersuchten Schicht gehöriger Schichten bei. Es ist zweckmäßig, während des Überganges der tomographischen Lewegung von der X-Richtung auf die Y-Richtung die Röntgenquelle abzuschalten, um die nachteiligen Einflüsse der Röntgenstrahlung so gering wie möglich zu halten.

Bei der Transformation der Ausgangsbildsignale in Abhängigkeit von den mittels der Auswertungsschaltung gewonnenen Kontrastdaten, welche für die X-Richtung im folgenden als Kx-Werte und für die Y-Richtung als Ky-Werte bezeichnet werden, werden diese Kx- und Ky-Werte gemeinsam zur gesonderten Verbesserung jedes Ausgangsbildes herangezogen. Hiebei erfolgt die Änderung des Niveaus jedes Bildpunktes des Ausgangsbildes stufenweise, wobei die Stufenhöhe stets gleich und gleich dem geringsten Grauskalenschritt der verwendeten Matrix ist. Es findet lediglich eine Erhöhung des dem jeweiligen Bildpunkt zugeordneten Signalniveaus statt, jedoch keine Herabsetzung desselben. Ferner ist es zweckmäßig, wenn gemäß einer Weiterbildung der Erfindung die Transformationsschaltung einen Speicher zur gruppenweisen Speicherung der ursprünglichen Bildsignale hat, welchem weitere Speicher zugeordnet sind, welche die Ergebnisse der statistischen Erfassung der Kontrastvergleiche speichern. Auf diese Weise werden die Bildpunkte jedes Ausgangsbildes jeweils in zwei Gruppen aufgeteilt, die, wie die schwarzen bzw. weißen Felder eines Schachbrettes, auf zwei Gruppen aufgeteilt und so gespeichert werden. Sodann kann nach bestimmten Regeln die stufenweise Erhöhung für jeden Bildpunkt gesondert durchgeführt werden, wobei zunächst die Bildpunkte der einen Gruppe erfaßt werden und, sobald dieser Transformationsvorgang vollendet ist, mit den so gewonnenen Ergebnissen die Bildpunkte der anderen Gruppe erfaßt werden. In der Folge werden so viele Transformationsschritte durchgeführt, als nötig sind, um eine Situation zu erreichen, in welcher kein Bildpunktniveau mehr erhöht werden kann, ohne das kohärente Bild zu zerstören.

Die so gewonnenen transformierten Bilder können bereits, einzeln betrachtet, beträchtlichen diagnostischen Wert haben. Es ist jedoch zweckmäßig, die so gewonnenen, verbesserten Ausgangsbilder in an sich bekannter Weise zu integrieren und das Ergebnis, etwa auf einem Monitor der Bilddarstellungseinrichtung, sichtbar zu machen.

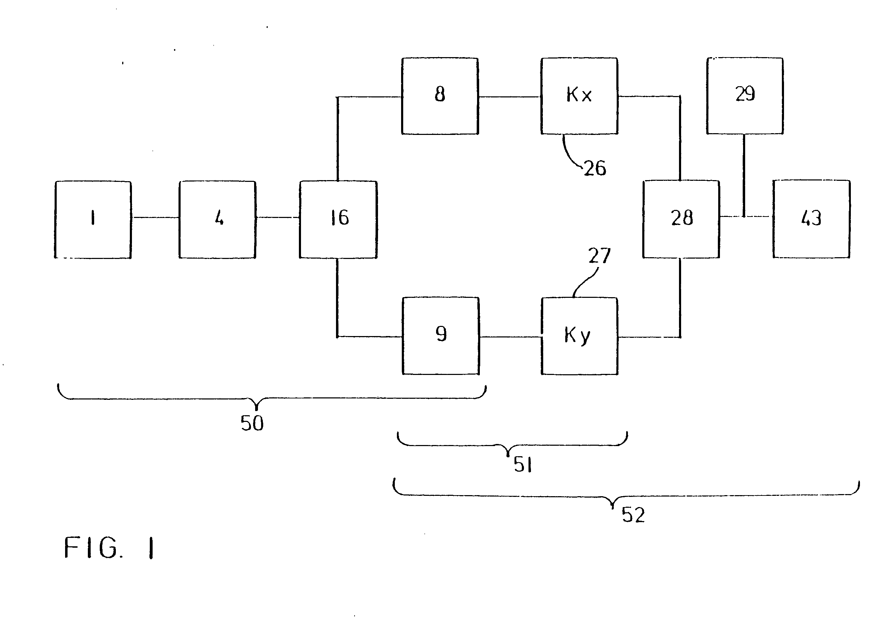

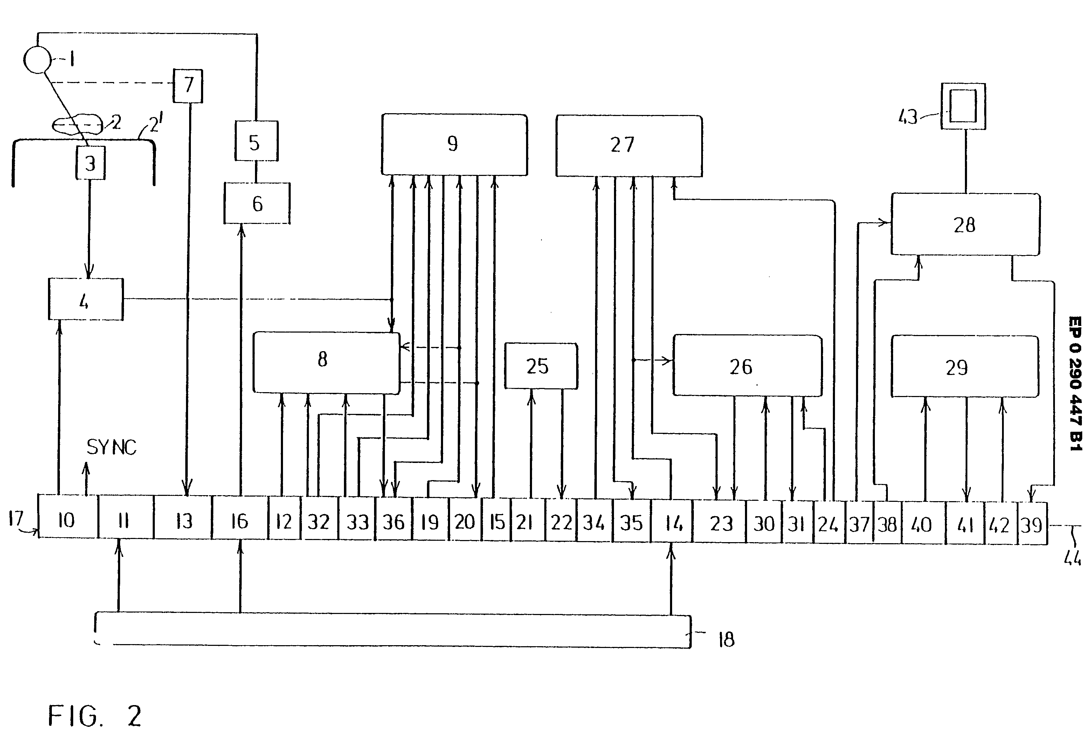

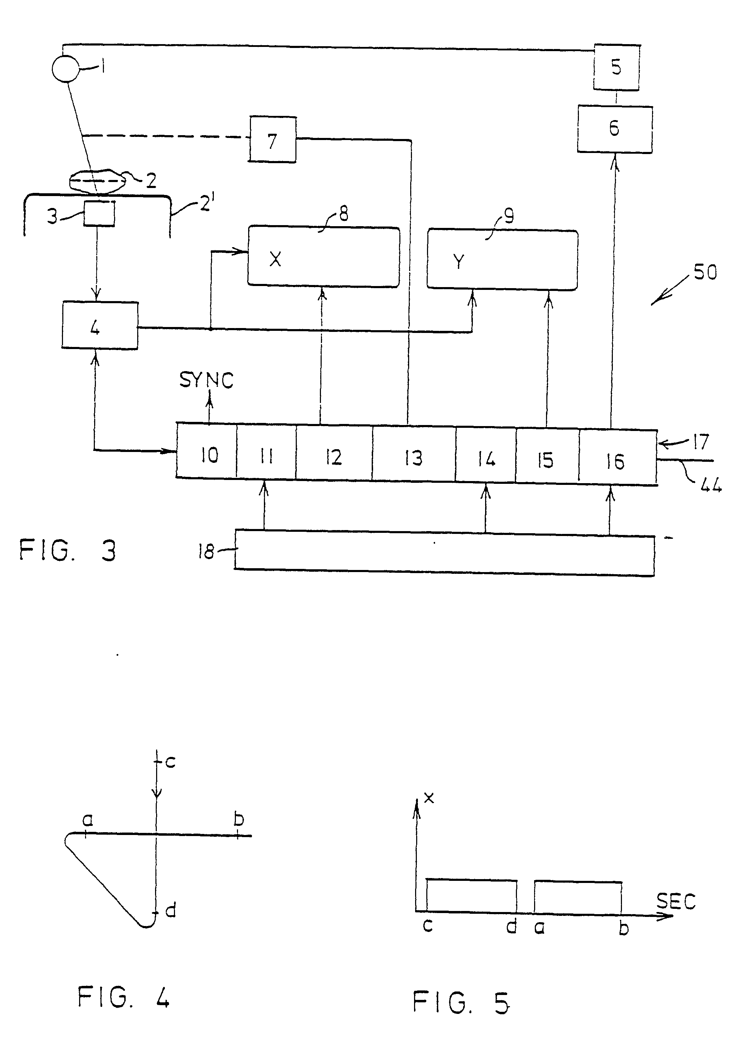

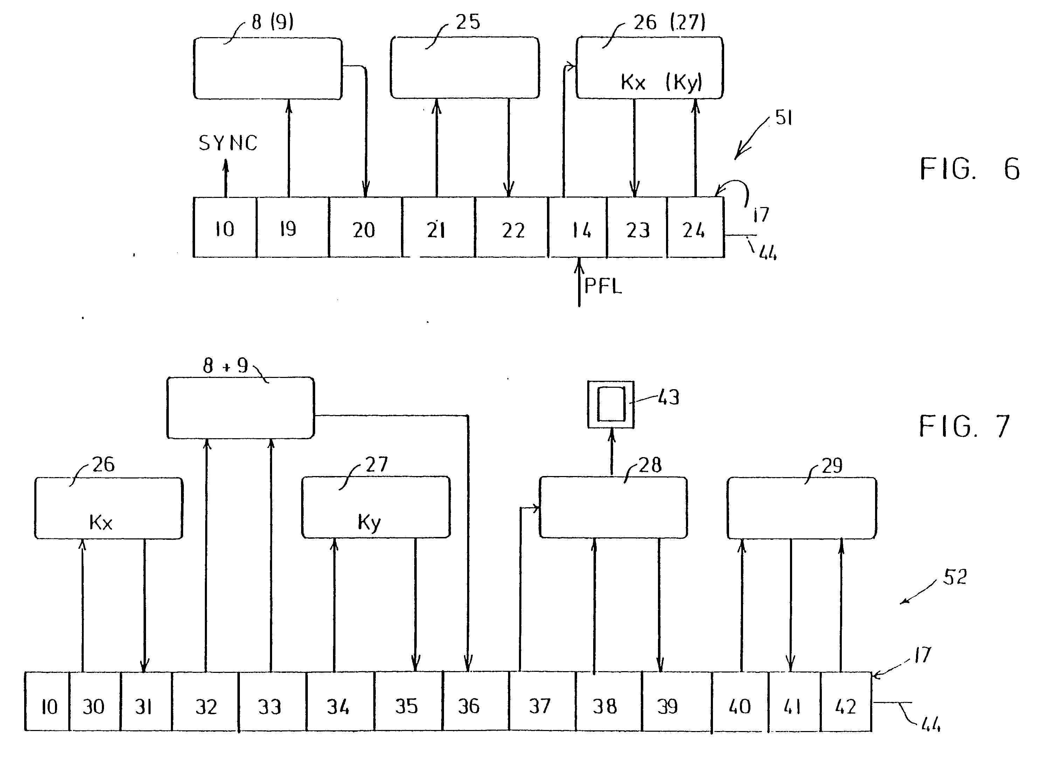

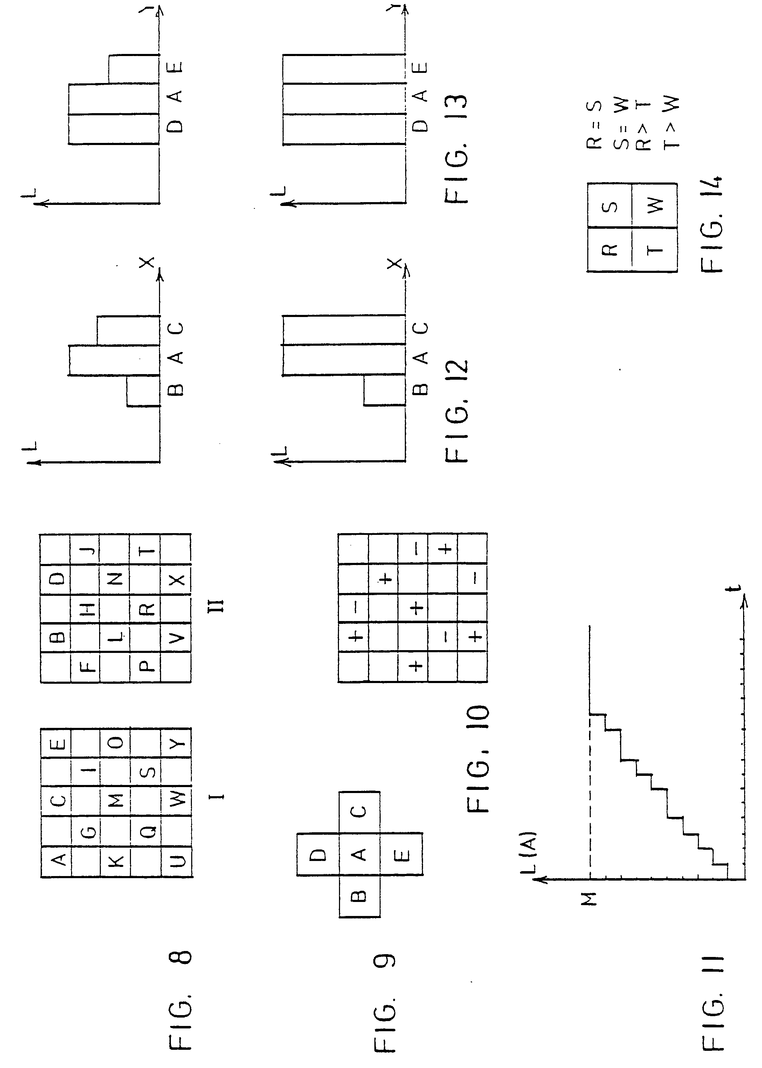

Fig. 1 zeigt ein vereinfachtes Blockschaltbild der Vorrichtung. Fig. 2 ist ein detailliertes Blockschaltbild. Fig. 3 zeigt, gleichfalls in Blockschaltbildform, die für die Gewinnung und Speicherung der Ausgangsbilder nötigen Schaltungsteile. Fig. 4 zeigt die tomographische Bewegung der Röntgenquelle. Fig. 5 zeigt das Zeitdiagramm der Bewegung nach Fig. 4. Fig. 6 zeigt die zur Ermittlung der Kx-Werte bzw. Ky-Werte nötigen Schaltungsteile. Fig. 7 zeigt die zur Verbesserung der Ausgangsbilder unter Zuhilfenahme der Kx-Werte und der Ky-Werte nötigen Schaltungsteile. Fig. 8 zeigt schematisch ein Detail des hiebei angewendeten Verbesserungsvorganges. Fig. 9 zeigt eine Kombination von Bildpunkten und Fig. 10 ist ein Beispiel der eingespeicherten Kx-Werte. Fig. 11 zeigt die stufenweise Veränderung des Helligkeitswertes für einen bestimmten Bildpunkt. Die Fig. 12 und 13 zeigen die Helligkeitsverteilung in fünf Bildpunkten einer Bildpunktkombination nach Fig. 9 jeweils vor und nach der Verbesserung. Fig. 14 zeigt schematisch eine mögliche Konfliktsituation bei der Beurteilung der Helligkeitsverteilung in vier Bildpunkten.

Die Vorrichtung hat eine Röntgenstrahlenquelle 1 (Fig. 1, 2, 3), mit deren Strahlen das Objekt 2 untersucht wird, das auf einem für die Röntgenstrahlen durchlässigen Tisch 2′ liegt. Unterhalb des Tisches 2′ befindet sich in üblicher Weise ein auf die Röntgenstrahlung abgestimmter Strahlungsempfänger 3, der mit einem Bildverstärker und einer Fernsehkamera versehen ist. Der Ausgang dieser Fernsehkamera ist an einen Analog-Digital-Umsetzer 4 einer Aufzeichnungsschaltung 50 angeschlossen, der für die einzelnen Bildpunkte entsprechend der Helligkeit der einzelnen Bildpunkte digitalisierte Bildsignale an zwei Speicher 8, 9 mit Direktzugriff liefert. Die Röntgenstrahlenquelle 1 wird von einem Röntgenstrahlengenerator 5 gespeist, der mit einer Steuerung 6 zur Einstellung der Bestrahlungsparameter versehen ist. Ferner ist eine Einrichtung zur Bewegung der Röntgenstrahlenquelle 1 und des Strahlungsempfängers 3 vorhanden. Diese im Detail nicht dargestellte Einrichtung hat einen Bewegungsarm, welcher der Röntgenstrahlungsquelle 1 eine in einer parallel zum Tisch 2′ liegenden Ebene vollführte Bewegung verleiht, die in Fig. 4 dargestellt ist und aus zwei einander kreuzenden, vorzugsweise normal aufeinander stehenden Abschnitten a-b und c-d besteht. Die Reihenfolge dieser beiden Abschnitte ist bedeutungslos. Beginn und Ende der beiden Bewegungsabschnitte werden jedoch von einem mit dem Bewegungsarm der Röntgenquelle 1 gekoppelten Fühler 7 überwacht, dessen Ausgangssignale zu einem Logikkreis 13 der Aufzeichnungsschaltung 50 geführt sind. Von der in Fig. 4 dargestellten Bewegung wird der Abschnitt a-b im folgenden als X-Abschnitt bezeichnet, während dessen Durchführung X-Signale vom Analog-Digital-Umsetzer in den Speicher 8 eingegeben werden, wogegen der Abschnitt c-d der Y-Abschnitt ist, bei dessen Durchführung Y-Signale vom Umsetzer 4 in den Speicher 9 eingegeben werden. Unter Zugrundelegung einer üblichen Mechanik dauert die Durchführung des in Fig. 4 dargestellten Bewegungszyklus etwa 8 Sekunden. Da eine übliche Fernsehkette 25 Bilder pro Sekunde abgibt, ist die Bildgesamtzahl pro Abschnitt a-b bzw. c-d etwa 70 Bilder. Um diese nicht für die Bildaufzeichnung ausgenützten Bestrahlungszeiten so kurz wie möglich zu halten, empfiehlt es sich, die Bewegung beim Übergang vom X-Abschnitt zum Y-Abschnitt (bzw. umgekehrt) zu beschleunigen (siehe das in Fig. 5 dargestellte Zeitdiagramm). Es genügt, die $2 \times 70 = 140$ Bilder, welche im folgenden als Ausgangsbilder bezeichnet werden, mit fluoroskopischer Röntgenstrahlendosis bzw. einer nur geringfügig stärkeren Dosis aufzunehmen, wodurch in Vergleich zu der bei üblichen Tomographie-Verfahren verwendeten Röntgenstrahlendosis eine beträchtliche Herabsetzung erzielbar ist. Patient und Untersuchungspersonal werden daher geschont.

Zur Gewinnung der tomographischen Röntgenbilder aus den erwähnten Signalen werden mit Hilfe der Aufzeichnungsschaltung 50, einer Auswertungsschaltung 51 (Fig. 1, 2, 6) und einer Transformationsschaltung 52 (Fig. 1, 2, 7) im wesentlichen drei Hauptphasen der Auswertung vorgenommen, und zwar:

Phase I: Sie wird im wesentlichen in der Aufzeichnungsschaltung 50 (Fig. 3) durchgeführt. In dieser Phase erfolgt eine Unterteilung der Aufzeichnung der Ausgangsbilder entsprechend den beiden Sektoren der tomographischen Bewegung.

Phase II: Sie erfolgt im wesentlichen in der Auswertungsschaltung 51 (Fig. 1, 2, 6). In dieser Phase erfolgt die statistische Auswertung der Kontraste einander benachbarter Bildpunkte in zwei aufeinander normal stehenden Richtungen der Abtastbewegung.

Phase III: Für diese Phase wird die Transformationsschaltung 52 (Fig. 1, 2, 7) herangezogen. Hiebei werden die in der zweiten Phase gewonnenen Werte benutzt, um alle in der ersten Phase aufgezeichneten Ausgangsbilder zu verbessern.

In der ersten Phase werden die vom Umsetzer 4 erhaltenen digitalen Bildsignale nach X- bzw. Y-Abschnitten getrennt in den Speichern 8 bzw. 9 gespeichert. Diese Trennung wird vom Logikkreis 13 gesteuert, der zusammen mit weiteren Logikkreisen 10, 11, 12, 14, 15, 16 eines Prozessors 17 an einem gemeinsamen Hauptweg 44 (BUS) angeschlossen ist. Der Logikkreis 10 ist hiebei als Synchrongenerator ausgebildet, welcher den Analog-Digital-Umsetzer 4 bzw. die von ihm gelieferten Videosignale mit den Adressensignalen synchronisiert, die von den Logikkreisen 12, 15 an die beiden Speicher 8 bzw. 9 geliefert werden. Der Prozessor 17 wird von einem Bedienungspult 18 gesteuert, von welchem aus die Bildanzahl für die beiden Abschnitte a-b bzw. c-d (Fig. 4) der tomographischen Bewegung in Übereinstimmung mit der vorgegebenen Bestrahlungszeit der tomographischen Bewegungsvorrichtung wählbar ist. Diese Daten werden im Logikkreis 11 gespeichert. In Abhängigkeit von der Bildzahl stellt die Bedienungsperson einen Schwellenwert PFL für den Wahrscheinlichkeitsfaktor ein, welcher im Logikkreis 14 für einen später noch zu beschreibenden Transformationsvorgang benötigt wird. Der Logikkreis 16 ist als Startkreis ausgebildet, mit welchem der Beginn der Belichtung und damit des Bildaufzeichnungsvorganges für die Ausgangsbilder vom Steuerpult 18 aus eingeleitet werden. Über die gemeinsame BUS-Leitung 44 wirkt der Logikkreis 16 mit den Logikkreisen 10 und 13 für die Erzeugung der Synchronsignale und die Erfassung der Bewegungsabschnitte der tomographischen Bewegung zusammen.

Sobald die Aufzeichnung der X-Signale und der Y-Signale der Ausgangsbilder in den Speichern 8 bzw. 9 beendet ist, erfolgt in der Auswertungsschaltung 51 (Fig. 1, 2, 6) als erster Auswertungsvorgang die Gewinnung von, den einzelnen Bildpunkten der Ausgangsbilder zugeordneten Kennwerten Kx, Ky. Die Auswertungsschaltung 51 hat zweckmäßig, um den Aufwand zu veringern, einige Schaltungsbauteile, welche auch Bestandteil der Aufzeichnungsschaltung 50 sind, z.B. die Speicher 8 und 9. Es ist auch möglich, die Gewinnung der Kennwerte Kx und Ky zugleich mit der erwähnten Aufzeichnung der X- bzw. Y-Signale durchzuführen, jedoch ist es aus Gründen der besseren Übersichtlichkeit halber und auch zur Schaltungsvereinfachung günstiger, diese Vorgänge zu trennen.

Die in den Speichern 8 bzw. 9 gespeicherten Bildsignale der X- bzw. Y-Abschnitte der Ausgangsbilder werden für jeden dieser beiden Abschnitte getrennt vier Vorgängen unterworfen, die im folgenden mit a) bis d) bezeichnet sind :

a) Zunächst wird für jedes Bildpunktpaar in der Auswertungsschaltung 51 der positive oder negative Kontrastunterschied zweier benachbarter Bildpunkte im X-Abschnitt der Bewegung nach Fig. 4 festgestellt. Der Kontrastunterschied ist hiebei definiert als Niveauunterschied der den Helligkeiten von Bildpunktpaaren entsprechenden elektrischen Signale. Unabhängig von der Größe des Kontrastunterschiedes wird jedoch nur das Vorzeichen, also + oder — gespeichert. Dies ist anhand der Fig. 9 näher erläutert, die eine kreuzförmige Anordnung von fünf Bildpunkten eines beliebigen digitalen Bildes zeigt. In Bezug auf den mittigen Bildpunkt A bestehen vier Kontraste, nämlich zwei in x-Richtung und zwei in y-Richtung. Diese Kontraste sind : BA, AC, DA, AE. Jeder dieser Kontraste kann das Vorzeichen + oder — haben, was von den Niveauwerten der betreffenden Bildpunkte abhängt. Zweckmäßig wird die Definition dieser Vorzeichen so gewählt, daß das Vorzeichen + für BA bedeutet, daß A > B ist. Das Vorzeichen + für AC bedeutet, daß C > A. Entsprechend bedeutet + für DA, daß A > D und für AE, daß E + A. Entsprechend bedeutet — für BA, daß B > A ; für AC, daß A > C ; für DA, daß D > A und für AE, daß A > E. Eine derartige Wahl der Vorzeichen der Kontraste ist zweckmäßig, wenn die Aufzeichnungsrichtung bzw. Ablesung der Bildpunkte in üblicher Weise erfolgt, nämlich von der linken Bildseite zur rechten Bildseite für die Kontraste in x-Richtung und vom oberen Bildteil zum unteren Bildteil für die Kontraste in y-Richtung (Fig. 4).

b) Sodann werden die gleichem Vorzeichen zugehörigen Kontrastunterschiede für die jeweils gleichen Bildpunktpaare aller Bilder gezählt. Mit anderen Worten : Es wird für alle Bildpunktpaare jene Bildanzahl festgestellt, in der sich für ein bestimmtes Bildpunktpaar das jeweils gleiche Vorzeichen des Kontrastunterschiedes einstellt. Es ergeben sich die beiden Werte N+ und N—.

c) Durch Substraktion (N+)-(N—) ergibt sich der Wert PF, welcher die Rolle eines Wahrscheinlichkeitsfaktors für einen einem bestimmten Bildpunktpaar zugeordneten Kontrast spielt.

d) Schließlich erfolgt eine Gegenüberstellung der für die einzelnen Bildpunktpaare gewonnenen PF-Werte mit dem früher erwähnten vorgegebenen Schwellenwert PFL, der die Rolle eines Prozentsatzes spielt, zu dem der jeweilige Kontrast in den Ausgangsbildern vorkommen muß, um gültig zu sein. Überschreitet der positive oder negative, gemäß Vorgang c) gewonnene PF-Wert den Grenzwert PFL, so wird das betreffende Vorzeichen als Kx-Wert bzw. Ky-Wert gespeichert.

In der Auswertungsschaltung 51 erfolgt die Einspeicherung der gewonnenen Kx-Werte in den Speicher 26 (Fig. 2, 6), die Einspeicherung der Ky-Werte in den Speicher 27. Hiebei werden die zur Gewinnung der Kx- bzw. Ky-Werte dienenden X- bzw. Y-Signale von den Speichern 8 bzw. 9 abgefragt, wobei ein vom Synchronisationslogikkreis 10 synchronisiertes Register 19 (Fig. 2, 6) die Adressierung der Bildpunkte an die Speicher 8 bzw. 9 besorgt und der Wert des jeweiligen Bildpunktniveaus im Kontrastdetektor 20 eingespeichert wird. Dieser Wert wird dort für eine Zeit gespeichert, um den analogen Wert des mit dem betreffenden Bildpunkt zu vergleichenden weiteren, insbesondere des benachbarten, Bildpunktes zu erfassen. In einer Vergleichsstufe 21 wird sodann der dem oben erwähnten Vorgang a) entsprechende Vergleich durchgeführt und das Ergebnis in einem Speicher 25 mit Direktzugriff eingespeichert, welcher eine Einbildmatrix darstellt. Die Ergebnisse des erwähnten Niveauvergleiches werden an der Adresse A des Speichers 25 mit + 1 gespeichert, wenn das Niveau von A größer war als das Niveau B, und mit — 1, wenn das Niveau von A kleiner war als das Niveau von B. Für den Fall Niveau A = Niveau B erfolgt keine Speicherung, so daß die betreffenden Speicherplätze leer bleiben.

Die Speicherung der Vorzeichen zum Zwecke ihrer statistischen Auswertung erfolgt zweckmäßig nach folgender Regel : Das Kontrastvorzeichen des Bildpunktpaares BA (Fig. 9) wird an der Adresse A gespeichert ; das Kontrastvorzeichen des Bildpunktpaares AC wird an der Adresse C gespeichert ; das Kontrastvorzeichen des Bildpunktpaares DA wird an der Adresse A gespeichert; das Kontrastvorzeichen des Bildpunktpaares AE wird an der Adresse E gespeichert. Es erfolgen daher an der Adresse A im angenommenen Beispiel die Aufzeichnungen zweier verschiedener Informationen. Die beste Lösung hiefür ist die Verwendung zweier gesonderter Speicher mit Direktzugriff, wobei einer dieser Speicher lediglich für die Aufzeichnung der in x-Richtung gemessenen Kontraste verwendet wird, der andere Speicher für die Aufzeichnung der in y-Richtung gemessenen Kontraste.

Das dem nächsten Ausgangsbild entsprechende Niveau des Bildpunktes A und das analoge nächste Niveau des Bildpunktes B ergeben eine Wiederholung dieses Vergleichsvorganges, wobei das Resultat mit dem zuvor durchgeführten Substraktionsvorgang in einem Integrator 22 summiert wird, der an den Speicher 25 angeschlossen ist. Der Integrator 22 kann also nach zwei in der Vergleichsstufe 21 durchgeführten Vergleichsvorgängen die Werte + 2, + 1, 0, — 1 oder — 2 für den betreffenden Bildpunkt (z. B. A) aufweisen. Das Resultat wird in einem weiteren Speicher 26 mit Direktzugriff an der Adresse A gespeichert, welcher Speicher eine Einbildmatrix bildet. In analoger Weise wird sodann das dem gleichen Bildpunkt zugeordnete Kontrastsignal des dritten Ausgangsbildes (geliefert vom Speicher 8 bzw. 9) in der Vergleichsstufe 21 ermittelt und zu dem zur selben Zeit im Speicher 26 gespeicherten Wert summiert. Das Ergebnis wird im Speicher 25 gespeichert. Der Kontrastdetektor 20, die Vergleichsstufe 21 und der Integrator 23 arbeiten in der beschriebenen Weise für alle Ausgangsbilder weiter, wobei die jeweils zuvor in den Speichern 25 und 26 (für die X-Werte) bzw. 27 (für die Y-Werte) befindlichen Werte durch neue Werte laufend ersetzt werden. Die beschriebene Integration der Kontrastsignale kann auch mit nur einer einzigen Speichermatrix mit Direktzugriff durchgeführt werden, jedoch arbeitet die beschriebene Variante schneller.

Sobald nun auf die beschriebene Weise die oben erwähnten Vorgänge a), b) und c) für alle 70 Ausgangsbilder des X-Abschnittes der Aufnahme abgeschlossen sind, wird der letzte PF-Wert im Speicher 26 gespeichert. Der Logikkreis 16 (Fig. 2), welcher eine Timing-Funktion ausübt, startet nun den Logikkreis 14, in welchem der zuvor erwähnte Schwellenwert PFL gespeichert wurde. Die letzten Werte von PF werden nun nochmals in den Speicher 26 eingegeben und in einer weiteren Vergleichsstufe 23 mit dem vorgegebenen PFL-Wert verglichen. Alle Werte, die kleiner sind als PFL, werden sodann aus dem Speicher 26 entfernt. Die verbleibenden Werte bleiben im Speicher 26 und ergeben dort die Kx-Werte (Fig. 10). Ein Kx-Vorzeichen in Position A (siehe Fig. 9) bedeutet den Kontrast zwischen den Bildpunkten B und A. In analoger Weise wird für die Y-Abschnitte der Ausgangsbilder vorgegangen. Hiebei erfolgt der Kontrastvergleich zwischen benachbarten Bildpunkten in der Richtung der Y-Abtastung des Objektes (Fig. 4), so daß also beispielsweise der Vergleich zwischen den Helligkeiten der Bildpunkte D und A (Fig. 9) stattfindet, wenn die Adressierung in Fig. 9 von oben nach unten erfolgt. Die im Speicher 27 verbleibenden gespeicherten Werte bilden die Ky-Werte.

Die im Speicher 26 bzw. 27 verbleibenden Kx-Werte oder Ky-Werte können positiv oder negativ sein. Die Anzahl der Kx-Werte bzw. Ky-Werte hängt für ein vorgegebenes Objekt vom durch die Bedienungsperson vorgegebenen PFL-Wert ab. Kleinere Schwellenwerte PFL ergeben mehr Kx- bzw. Ky-Werte. Hingegen ergeben höhere PFL-Schwellenwerte zwar weniger Kx- bzw. Ky-Einspeicherungen in den Speichern 26 bzw. 27, jedoch ist dann die Information verläßlicher. Ein Kompromiß läßt sich für eine bestimmte Objekttype in der Praxis leicht finden.

Die in der beschriebenen Weise in den Speichern 26, 27 am Ende der Phase II gespeicherten Kontrastwerte werden später in der Phase III in noch näher beschriebener Weise zur Verbesserung der Ausgangsbilder herangezogen. Fig. 10 zeigt ein Beispiel der gestreuten Verteilung der positiven und negativen Kontraste, wobei dieses Beispiel der Einfachheit halber für eine sehr kleine Matrix von 25 Bildpunkten (5 × 5) gewählt ist. Es ist jedoch leicht einzusehen, daß die endgültige Zeichenverteilung in einer sehr großen Matrix (z. B. einer in der Praxis verwendeten Matrix von 512 × 512 Bildpunkten) ähnlich sein wird. Fig. 10 ist hiebei so aufzufassen, daß diese Figur die Verteilung der Kx-Kontraste allein (oder die Verteilung der Ky-Kontraste allein) zeigt.

Nach Beendigung dieser Schritte leitet der die zeitlichen Abläufe steuernde Logikkreis 16 die nächste Verfahrensstufe (Phase III) ein. Hiezu dient die Transformationsschaltung 52, die in den Fig. 2 und 7 im Detail dargestellt ist. Diese Transformationsschaltung 52 verwendet die beiden Speicher 8, 9, in welchen die X-Abschnitte der Ausgangsbilder bzw. die Y-Abschnitte derselben gespeichert sind und weiters die beiden Speicher 26, 27, in welchen die Kx-Werte bzw. die Ky-Werte der zuvor erwähnten Verfahrensstufe gespeichert sind. Diese Daten werden dazu verwendet, jedes Ausgangsbild einzeln zu transformieren. Bei dieser Transformation erfolgt die Vermeidung von Widersprüchlichkeiten zwischen den gespeicherten Daten. Ein solcher Widerspruch ist in Fig. 14 dargestellt. Wenn sich aus den gespeicherten Werten ergibt, daß R = S und S = W, und wenn ferne R > T und T > W, dann besteht offensichtlich ein Widerspruch zwischen den gespeicherten Werten für R und W. Zur Beseitigung solcher in der Praxis unvermeidbar auftretender Widersprüche in der digitalen Bildabtastung werden die Bildpunkte der Bildmatrix, welche in den Speichern 8 bzw. 9 gespeichert sind, in zwei voneinander getrennte Gruppen I, II aufgeteilt, wie dies für eine 5 × 5 Matrix mit 25 Bildpunktadressen A bis Y in Fig. 8 dargestellt ist. Die Aufteilung erfolgt hiebei derart, daß die einzelnen Bildpunktinformationen wechselweise auf die beiden Gruppen aufgeteilt werden, welche gemeinsam stets ein einzelnes Bild darstellen. Diese beiden Bildpunktgruppen gemäß Fig. 8 werden wechselweise transformiert, derart, daß Widersprüche in, den einzelnen Bildpunkten zugehörigen Informationen ausgemerzt werden. Dies geschieht so, daß die Werte der einzelnen Bildpunkte stufenweise so geändert werden, daß das jeweilige Bild kohärent bleibt und das ursprüngliche Bild verbessert wird. Vor jeder stufenweisen Erhöhung eines Bildpunktniveaus erfolgt somit eine Überprüfung des Bildes auf Kontinuität, d. h. auf Widersprüche in der Gesamtinformation des Bildes. Hiebei wird zweckmässig so vorgegangen, daß für jeden Bildpunkt die Kontraste mit den beiden Nachbarbildpunkten in horizontaler und in vertikaler Richtung, gegebenenfalls unter Einschluß der Kx- bzw. Ky-Information, überprüft werden (Fig. 9) und der nächste schrittweise Niveauanstieg des betreffenden Bildpunktes nur dann erfolgt, wenn die Kontinuität des Bildes gewahrt bleibt. Das Niveau eines Bildpunktes, welches nicht mehr ansteigen kann, befindet sich im « blockierten » Zustand, welcher sich für alle Bildpunkte nach einer endlichen Anzahl von Transformationsschritten ergibt. Auf diese Weise entsteht aus dem ursprünglichen Zustand des Ausgangsbildes ein verbessertes Ausgangsbild.

Die Verbesserung jedes Bildpunktes erfolgt hiebei in mehreren Stufen, stets im Vergleich mit den Niveau-Werten, welche in der letzten, beendeten Transformationsstufe ermittelt wurden. In der ersten Stufe erfaßt die Bildtransformation lediglich die in den Bildpunkten der ersten Bildgruppe I (Fig. 8) enthaltene Information, unter Berücksichtigung des zugehörigen Ausgangsbildes und der Kx- und Ky-Werte. Die zweite Transformationsstufe erfaßt die Bildpunkte der zweiten Gruppe II (Fig. 8) und transformiert diese unter Berücksichtigung der bei den vorangegangenen Transformationen erhaltenen Werte der ersten Gruppe. Im dritten Schritt wird die erste Gruppe neuerlich transformiert, unter Berücksichtigung der soeben erhaltenen Werte der zweiten Gruppe, usw.

Es erfolgt also eine mehrfach wiederholte schrittweise Transformation der beiden jedem Ausgangsbild zugehörigen Bildgruppen, stets unter Berücksichtigung der Kx-Werte und der Ky-Werte. Hiebei wird das Helligkeitsniveau der einzelnen Bildpunkte nach später noch näher beschriebenen Regeln in stufenweisen Schritten bis zur Erreichung eines vorbestimmten Maximums M erhöht, was in Fig. 11 für den Bildpunkt A dargestellt ist. Auf der Ordinate ist hiebei das Helligkeitsniveau L des Bildpunktes aufgetragen, auf der Abszisse die Zeit t. Die Schritthöhe dieser stufenweisen Erhöhung entspricht der Stufenhöhe der Grauskala der verwendeten Matrix, ist also verhältnismäßig gering. Diese Verwendung kleiner Stufenhöhen bewährt sich bei der Beseitigung erratischer Kontraste in den Bildern bei der Beurteilung der Kontrastkonfiguration rund um den betrachteten Bildpunkt bei jedem Transformationsschritt.

Zur erwähnten Berücksichtigung der Kontrastkonfiguration rund um den jeweils betrachteten Bildpunkt (z. B. A in Fig. 9) bzw. zur Ermittlung des neuen Helligkeitswertes dieses Bildpunktes werden 14 Informationen verwendet: Zunächst die Helligkeitsniveaus in den Bildpunkten A, B, C, D, E im jeweiligen Ausgangsbild, weiters die Helligkeitsniveaus der analogen Bildpunkte in jedem Bild, welches beim jeweils letzten Transformationsschritt erzeugt wurde, und schließlich die vier Kx- und Ky-Vorzeichenwerte für die Kontraste der Bildpunktpaare AB, AC, AD und AE. Hiezu werden die zuerst erwähnten fünf Informationen von den Speichern 8, 9 (Fig. 2, 7) hergeleitet, die weiters erwähnten fünf Informationen von dem Speicher 28 mit Direktzugriff, welcher eine Einbildmatrix darstellt und die zuletzt erwähnten vier Informationen von den Speichern 26, 27. Zur Verarbeitung sind Prozessormoduli 31, 35, 36, 39 vorgesehen, die so programmiert sind, daß die 14 erwähnten Daten für jeden Bildpunkt miteinander verglichen werden und in Abhängigkeit dieses Vergleiches bestimmt wird, ob die nächste stufenweise Erhöhung des Helligkeitsniveaus des jeweils benachbarten Bildpunktes (z. B. A) nach den später noch näher beschriebenen Regeln durchgeführt wird oder nicht.

In der Startphase des Transformationsprozesses erfolgt die Anhebung des Helligkeitsniveaus aller Bildpunkte der beiden Gruppen ohne Berücksichtigung der Kontrastkonfiguration, um die Transformation an das konstante Helligkeitsniveau des Maximums des Grauskala-bereiches der verwendeten Matrix anzupassen. Diese Startphase endet, sobald zumindest ein Bildpunkt dieses Helligkeitsniveau bei einem bestimmten Transformationsschritt erreicht, sodann beginnt eine Phase des Niveauausgleiches und der Kontrastverbesserung. Die stufenweise Veränderung des Niveaus einzelner Bildpunkte erfolgt hiebei durch den Stufengenerator 37 und einen Integrator 38, welcher das im Modul 36 aufscheinende Niveau des gerade betrachteten Bildpunktes mit dem vom Stufengenerator 37 erzeugten Einstufensignal integriert und den neuen Wert in den Speicher 28 eingibt. Der Integrator 38 hat hiebei einen eingestellten Schwellenwert, der dem Maximalwert des Gauskalabereiches der verwendeten Matrix entspricht. Sobald dieser Schwellenwert erreicht ist, erfolgt die erwähnte Einleitung der zweiten Phase durch laufende Abfragung des Inhaltes der Speicher 8, 9, 26, 27 und 28, jeweils für eine der beiden Bildgruppen (Fig. 8) getrennt und für eine kreuzweise einander benachbarte Anordnung der erfaßten Bildpunkte gemäß Fig. 9. In dieser zweiten Phase werden die Niveaus der Bildpunkte der Ausgangsbilder nach den folgenden Regeln stufenweise erhöht, und zwar abwechselnd für die Bildpunkte der einen und jene der anderen Gruppe.

Die zuvor erwähnten Regeln für die stufenweise Niveauerhöhung sind folgende : Es wird das Niveau des Bildpunktes A stets um eine Stufe angehoben, mit Ausnahme der folgenden drei Fälle :

a) Das Niveau des Bildpunktes A hat das Maximum des Grauskalabereiches der Matrix erreicht. Diese Helligkeitsniveaubebrenzung ist endgültig, d. h. es erfolgt keine weitere Steigerung des Niveaus des betrachteten Bildpunktes mehr.

b) Wenn das Niveau des betrachteter. Bildpunktes A größer ist als das Niveau jedes der vier benachbarten Bildpunkte B, C, D, E. In diesem Fall erfolgt eine Blockierung der Helligkeitssteigerung des Bildpunktes A nur für den jeweiligen Transformationsschritt und es kann diese Blockierung beim nächsten Transformationsschritt aufgehoben werden.

c) Wenn einer der dem jeweils betrachteten Bildpunkt A benachbarten Bildpunkte B, C, D, E, z. B. der Bildpunkt D, bereits endgültig blockiert, etwa entsprechend Fall a), ist und das Vorzeichen des Kontrastes AB anzeigt, da A < B und dieses Vorzeichen vom Ausgangsbild bestätigt wird und mit dem Vorzeichen von Kx für die AB-Position übereinstimmt. Diese Blockierung des Niveaus ist endgültig.

Analog werden natürlich auch die anderen, dem Ausgangsbild entsprechenden Bildpunkte behandelt. In den Fig. 12 und 13 sind die Helligkeitsniveaus von jeweils drei nebeneinanderliegenden untersuchten Bildpunkten vor (oberer Teil der Fig. 12) bzw. nach (unterer Teil der Fig. 12) der Transformation mit Bezug auf eine Bildpunktkonfiguration gemäß Fig. 9 dargestellt. Voraussetzung ist, daß ein Kx in Position BA gefunden ist (und zwar A > B) und kein Kx in Position AC wirkt. Für Fig. 13 ist Voraussetzung, daß keine Ky in Positionen DA und AE wirken.

In der beschriebenen zweiten Phase adressieren die Adressenregister 30, 32, 34 und der Stufengenerator 37 die Bildpunkte einzeln für jede der beiden in Fig. 8 dargestellten Gruppen und zusätzlich die rund um den jeweils betrachteten Bildpunkt A liegenden Bildpunkte B, C, D, E (Fig. 9). Dieses doppelte Adressiersystem ist in Fig. 7 lediglich für die Speicher 8 und 9 dargestellt, wobei 33 einen zusätzlichen Adressiermodul bildet. Die Transformation des jeweiligen Bildes endet, sobald alle Bildpunkte des betreffenden Bildes blockiert sind. Sodann wird das nächste Bild in der gleichen Weise transformiert. Die fertig transformierten 140 Bilder werden in einem weiteren Speicher 29 (Fig. 2, 7) mit Direktzugriff aufgezeichnet. Die Adressierung erfolgt hiebei in der bei der Aufzeichnung von Fernsehbildern üblichen Weise mit Hilfe eines Adressiermoduls 42. Der Modul 41 bildet einen Integrator bekannter Bauart.

Bei der in Fig. 8 dargestellten kleinen Matrix von insgesamt 25 Bildpunkten entspricht der linke Teil (I) dem Speicher 29 und der rechte Teil (II) dem Speicher 28.

Die Verwendung zweier gesonderter Matrix-Speicher ist wesentlich im Hinblick auf die Funktion der Vorrichtung in der dritten Phase III der Bildtransformation. Bei der Veränderung eines Bildes oder auch nur eines kleinen Bildteiles unter Verwendung neuer Kontrastwerte treten nämlich Schwierigkeiten auf, wenn hiefür übliche Methoden verwendet werden, da dann ein neuer Kontrastwert eine Inkontinuität des Bildes hervorruft oder zur Änderung aller Kontrastwerte des Bildes zwingt, was offensichtlich zu einem Bild führt, das vom ursprünglichen Bild stark abweicht und daher für die Tomographie wertlos ist, bei welcher es ja auf ein Bild einer selektiven Lage ankommt. Weiters würde die Einführung eines neuen Kontrastwertes zusammen mit unvermeidlichen neuen Bildpunktniveauwerten leicht zu Widersprüchen zwischen Kontrasten und den ihnen zugehörigen Niveau-Werten führen. Um diese Schwierigkeiten zu vermeiden, wird die beschriebene Transformation (Phase III) verwendet.

Fig. 8 zeigt, daß die Aufteilung der Bildpunkte ähnlich der Anordnung der weißen bzw. schwarzen Felder eines Schachbrettes erfolgt (schwarze Felder beispielsweise repräsentiert durch Teil I der Fig. 8, weiße Felder beispielsweise repräsentiert durch Teil II der Fig. 8). Hiebei wird die Matrix I mittels eines üblichen, für den Speicher geeigneten Adressierprogrammes derart adressiert, daß nach der Adresse A die Adressen C, E, G, I, K usw. folgen. Analog wird die Matrix II in der Reihenfolge B, D, F, H, J usw. adressiert. Es ist wesentlich, daß der in der betreffenden Matrix jeweils adressierte Bildpunkt nur freie Bildpunkte in den beiden x-Richtungen und in den beiden y-Richtungen benachbart hat. Eine solche Aufteilung der Level-Werte stellt ein Bild ohne direkte Verbindung mit den Originalkontrasten dar, die im Ausgangsbild enthalten sind. Es kann daraus gefolgert werden, daß jede Änderung jedes dieser Levels in einer solchen Anordnung nicht nachteilig für die Kontinuität des Bildes ist. Offensichtlich hat ein Bild dieser Art an sich keinen praktischen Wert. Es wird im Zusammenhang mit der beschriebenen Vorgangsweise lediglich als Mittel für die Transformation des kompletten Bildes verwendet, welches von allen Bildpunkten gebildet wird, die jeweils sowohl in der Matrix I als auch in der Matrix II (Fig. 8) gespeichert sind.

Der Transformationsvorgang sei nochmals im Detail für einen Bildpunkt, z. B. den Bildpunkt M, erläutert. Um zu vermeiden, daß der Niveauwert des Bildpunktes M in beiden Richtungen verändert werden muß (zuerst als Anstieg und dann als Absenkung, falls der Anstieg mit der Kontinuität des Bildes nicht verträglich ist), wird der beschriebene stufenweise Anstieg des Bildpunktniveaus verwendet. Dieser erlaubt die Anhebung des Bildpunktniveaus M auf den Wert M + 1, wobei 1 die Stufenhöle bedeutet, die so gering wie möglich gewählt werden sollte. Diese Niveauanhebung erfolgt jedoch nur bei Vorliegen bestimmter Bedingungen (siehe die drei vorstehend erwähnten Ausnahmen a, b, c). Diese Bedingungen beinhalten notwendigerweise die Kx- und Ky-Vorzeichen (falls vorhanden) zwischen den Bildpunktpaaren LM, MN, HM und MR (Fig. 8, Matrix I) derart, daß der Anstieg des M-Niveaus nur unter der Bedingung zugelassen wird, daß die eingeführte Veränderung den Kontrast in der Kx-Position (bzw. Ky-Position) nicht vermindert. Das Kontrastvorzeichen Kx (oder Ky) ist für diese Bedingung nur für den Fall gültig, daß das Kontrastvorzeichen durch das der Transformation unterliegende Ausgangsbild bestätigt wird. Anderseits wird jeder Anstieg des M-Niveaus zugelassen, falls seine Folge ein Kontrastanstieg in der Position von Kx (oder Ky) selbst ist. Auf diese Weise ergibt sich eine Verstärkung (oder ein Gewinn) der « wahren » Kontraste. Die übrigen vorstehend erwähnten Bedingungen (siehe früher unter a), b), c)) haben praktische Auswirkung auf den Start und das Anhalten des Transformationsprozesses.

Die stufenweisen Veränderungen werden in allen Bildpunkten bzw. den ihnen zugeordneten Helligkeitsniveaus der Matrix I unter den selben Bedingungen durchgeführt. Die neuen Niveauwerte werden unter Vermittlung eines zusätzlichen Speichers aufgezeichnet und als Bezugswerte im nächsten Schritt der Transformation verwendet, wenn die Bildpunktniveaus der Matrix II geändert werden. Wird in dieser Matrix der Bildpunkt N betrachtet, so werden zur Beurteilung der Bedingungen für den Anstieg auf N + 1 folgende Kontraste herangezogen : M' N, NO', I' N, NS'. Die Niveauwerte M', O', I' und S' sind nun verschieden im Vergleich zu den früher den Bildpunkten M, O, I, S zugeordneten Niveaus, da ja diese Werte in der Matrix I gerade geändert wurden (bei Erfüllung der genannten Bedingungen). Selbstverständlich müssen nicht alle dieser Niveaus um + 1 angehoben werden, falls die Bedingungen nicht erfüllt sind. Es kann jedoch angenommen werden, daß die Anzahl der blockierten Werte in einer frühen Stufe des Transformationsprozesses üblicherweise nicht groß ist, da der wesentliche Einfluß für das Abstoppen des Niveauanstieges des betreffenden Bildpunktes die Gefahr einer Inkontinuität des entstehenden Bildes ist und dies lediglich für den Fall einer unrichtigen Stellung eines bestimmten Kx oder Ky auftritt (widersprüchliche Anordnung der Kontraste). Derartige unrichtige Vorzeichen oder Stellungen von Kx oder Ky sind nicht wahrscheinlich, da die zweite Hauptstufe des Verfahrens (Phase II), durch welche die Kx- und Ky-Werte aufgefunden werden, empfindlich genug ist. Anderseits wird das Bild durch Anwendung der in der Phase III zur Anwendung kommenden Transformationsschritte niemals zur Inkontinuität zerstört. Ein bestimmtes irriges Kx oder Ky hat lediglich eine frühzeitige Blockierung der Level-Werte und ein Anhalten der Phase III zur Folge. Die Transformation der nächsten Bilder der 80 Ausgangsbilder (aus Phase I) kann sogar ergeben, daß das betrachtete Kx oder Ky ein wahrer Wert ist (bestätigt durch Vorzeichen und Stellung im der Transformation unterworfenen bestimmten Ausgangsbild) und die erhaltenen Bilder können ein hohes Niveau der Kontrastauflösung des Schichtbildes zeigen.

In Fig. 14 ist eine Anordnung für einen Kontrastkonflikt dargestellt. Die der Fig. 14 hinzugefügten Gleichungen R = S, S = W, R > T und T > W sind so zu verstehen, daß kein Kx in der Stellung RS besteht und kein Ky in der Stellung SW, daß jedoch ein Minus-Kx in der Stellung TW und Plus-Ky in der Stellung RT besteht. Der Konflikt ist dann unausweichbar, da das Niveau von T nicht zur selben Zeit größer und kleiner als R = S = T sein kann. Es muß daher in Wirklichkeit einer der Kontraste Kx oder Ky nicht zutreffen oder es muß ein Kontrast für die Position RS oder SW vorhanden sein. Wie jedoch oben ausgeführt wurde, dient der Transformationsprozeß nach Phase III dazu, die Einflüsse derartiger Konfliktanordnungen zumindest teilweise zu eliminieren.

Fig. 11 zeigt an Hand eines Beispieles die Folge der stufenweisen Veränderungen (Anstiege) des Niveauwertes eines bestimmten Bildpunktes. Jede Stufe ist einem Transformationsschritt des Bildpunktes zugeordnet, der in einer der zwei Matrixen I bzw. II (Fig. 8) enthalten ist. Das Niveau M stellt den letzten Wert im blockierten Zustand dar, wenn kein weiterer Anstieg entsprechend den zuvor erwähnten Bedingungen a), b), c) mehr möglich ist. Die längeren Schritte stellen dar, daß der Niveauwert für zwei aufeinanderfolgende Transformationsstufen konstant bleiben kann. Dies ist dadurch erklärbar, daß die Niveauwerte BCDE rund um einen beliebigen Bildpunkt A (Kreuzanordnung nach Fig. 9) in zwei Stufen Werte erreichen können, welche die Bedingungen für einen Niveauanstieg A erfüllen, was nach einer einzigen Stufe noch nicht der Fall war. Dies bedeutet auch, daß die Anstiegsbedingungen für jeden Bildpunkt jederzeit während aller Transformationsstufen über prüft werden müssen, unabhängig von einer zeitweisen Blockierung des Niveauwertes.

Das Ergebnis der stufenweisen Veränderung eines Bildpunktwertes ist im Hinblick auf die dadurch erzielte Kontrastverbesserung in den Fig. 12 und 13 dargestellt. Der obere Teil der Fig. 12 zeigt beispielsweise die anfängliche Level-Wert-Verteilung für die Bildpunkte B, A, C in Fig. 9, also für drei Bildpunkte, die in X-Richtung nebeneinander liegen. Für das Bildpunktpaar BA sei ein Kx vorhanden, dessen Vorzeichen + sei, d. h., daß A > B ist. Für die Position AC sei kein Kx vorhanden. Das Resultat der Transformation (vereinfacht) ist im unteren Teil der Fig. 12 dargestellt. Es zeigt eine Vergrößerung des BA-Kontrastes und eine totale Unterdrückung des Kontrastes AC, so daß dieser in der gerade geprüften Schicht nicht aufscheint.

Fig. 13 zeigt ähnliche Verhältnisse für die Y-Richtung. Es sei angenommen, daß sowohl für die DA-Position als auch für die AE-Position jeweils kein Ky vorhanden sei. Das resultierende, transformierte Bild zeigt eine totale Unterdrückung der beiden Kontraste, da diese gemäß den Erkenntnissen der untersuchten Schicht nicht zugehören.

An den Speicher 28 ist ein Monitor 43 angeschlossen, an welchem alle laufend transformierten Bilder und gegebenenfalls auch die Transformationsphasen und Transformationsschritte beobachtet werden können. Die einzelnen transformierten Bilder können bereits diagnostische Aussagen zulassen, jedoch ist es zweckmäßig, die gesamten 140 Bilder zu integrieren, um alle in den Ausgangsbildern enthaltene Information voll auszuwerten. Diese Integration erfolgt im Modul 41, das Ergebnis kann im Monitor 42 sichtbar gemacht werden.

Es sind zahlreiche Variationen der beschriebenen Vorrichtung möglich, z. B. :

Es kann die kreuzweise angeordnete Bildpunktkombination nach Fig. 9 ersetzt werden durch eine mehr Bildpunkte erfassende Kombination, etwa eine kreuzweise Bildpunktkombination mit neun Bildpunkten. Ferner ist es möglich, die Kontrastverhältnisse nicht zwischen einander unmittelbar benachbarten Bildpunkten zu erfassen, sondern in Bezug auf einander etwas entfernte Bildpunkte, z. B. den ersten und dritten Bildpunkt usw. Dieser Weg ist insbesondere dann angezeigt, wenn eine große Matrix aufgelöst werden soll.

Weiters ist es möglich, aus den vielen tomographischen Längsschnitten zugeordneten Bildern ein oder mehrere tomographische Querschnitte rechnerisch zu erhalten. Geeignete Vorrichtungen hiefür sind bekannt.

Ferner kann es zweckmäßig sein, die bekannten Verfahren zu verwenden, gemäß welchen ein Schnittbild aus zahlreichen Bildern rekonstruiert wird, die Projektionen entsprechen, bei welchen der Hauptstrahl immer normal zum Schirm des Bildverstärkers verläuft, um geometrische Verzerrungen zu vermeiden.

Wie bereits erwähnt, ist es im Rahmen der Erfindung möglich, zusätzlich zu den erwähnten zwei einander kreuzenden Bewegungsrichtungen der tomographischen Bewegung noch ein oder mehrere weitere Bewegungsrichtungen hinzuzufügen. Im allgemeinen kann jedoch mit der Zweikomponentenbewegung das Auslangen gefunden werden.

## Patentansprüche

1. Vorrichtung zur Gewinnung tomographischer Röntgenbilder mit verbesserten Kontrasteigenschaften, mit einer Röntgenquelle (1), deren Strahlung nach Passieren des Objektes (2) von einem Empfänger (3) aufgefangen und mittels eines Bildwandlers in der empfangenen Röntgenstrahlung bildpunktweise entsprechende elektrische Bildsignale von Ausgangsbildern umgesetzt wird, die über eine elektronische Schaltung einer Bilddarstellungseinrichtung, z. B. einem Monitor (43) od. dgl., zugeführt werden, wobei eine Mechanik während der Bestrahlung eine tomographische Relativbewegung zwischen Empfänger (3) und Röntgenquelle (1) bewirkt, dadurch gekennzeichnet, daß die elektronische Schaltung eine Auswertungsschaltung (51) für den über mehrere Ausgangsbilder wiederholten Kontrastvergleich zwischen einander benachbarten Bildpunkten (z. B. A, B, C, ...) und zur statistischen Erfassung der einzelnen Kontrastvergleiche hat, wobei in der Auswertungsschaltung (51) durch diese statistische Erfassung die Wahrscheinlichkeit des Auftretens von Kontrasten bestimmter Vorzeichen zwischen einander benachbarten Bildpunkten bestimmt wird, und daß eine Transformationsschaltung (52) zur Änderung der Ausgangsbildsignale in Abhängigkeit von den von der Auswertungsschaltung (51) gelieferten Signalen vorgesehen ist, mittels welcher Transformationsschaltung (52) Bildpunktpaare für weitere Kontrasterhöhung ausgewählt werden, für welche die Kontrastvorzeichen mit den Vorzeichen größter Wahrscheinlichkeit übereinstimmen, wobei der Ausgang der Transformationsschaltung an die Bilddarstellungseinrichtung, z. B. einen Monitor (43), angeschlossen ist.

2. Vorrichtung nach Anspruch 1, dadurch gekennzeichnet, daß die Auswertungsschaltung (51) für den Kontrastvergleich vieler, vorzugsweise aller, Ausgangsbilder eingerichtet ist.

3. Vorrichtung nach Anspruch 1 oder 2, dadurch gekennzeichnet, daß die Auswertungsschaltung (51) für den Kontrastvergleich aneinander angrenzender Bildpunkte eingerichtet ist.

4. Vorrichtung nach einem der Ansprüche 1 bis 3, dadurch gekennzeichnet, daß die Auswertungsschaltung (51) zumindest zwei Speicher (8, 9) für die getrennte Speicherung und Auswertung der ursprünglichen Bildsignale hat, die während der tomographischen Bewegung in zumindest zwei einander kreuzenden Abschnitten, vorzugsweise in zwei aufeinander normal verlaufenden Abschnitten (X, Y) erzeugt werden.

5. Vorrichtung nach einem der Ansprüche 1 bis 4, dadurch gekennzeichnet, daß die Auswertungsschaltung (51) eine Integrierstufe (23) für die Kontrastvergleiche aller Bilder enthält.

6. Vorrichtung nach einem der Ansprüche 1 bis 5, dadurch gekennzeichnet, daß die Auswertungsschaltung (51) auch eine Schwellenwertstufe (14) zur Berücksichtigung eines, vorzugsweise an einem Bedienungspult (18) einstellbaren, Schwellenwertes (PFL) für die statistische Erfassung der Kontrastvergleiche hat.

7. Vorrichtung nach einem der Ansprüche 1 bis 6, dadurch gekennzeichnet, daß die Auswertungsschaltung (51) zwei Speicher (26, 27) hat, welche die Ergebnisse der statistischen Erfassung der Kontrastvergleiche speichern, und daß diesen ein weiterer Speicher (28) der Transformationsschaltung (52) zugeordnet ist, der gruppenweise die transformierten Bildpunktwerte speichert, welche unter Berücksichtigung der Ergebnisse der Kontrastvergleiche berechnet werden.

8. Vorrichtung nach Anspruch 7, dadurch gekennzeichnet, daß ein Stufengenerator (37) vorgesehen ist, der das Helligkeitsniveau der Bildpunkte der Ausgangssignale stufenweise mit Hilfe eines Integrators (38) vergrößert.

9. Vorrichtung nach einem der Ansprüche 1 bis 8, dadurch gekennzeichnet, daß eine Aufzeichnungsschaltung (50) zwei Speicher (8, 9) mit Direktzugriff hat, denen die digitalisierten Ausgangsbildsignale nach zwei Bewegungsrichtungen der Röntgenquelle (1) getrennt zugeführt werden und die an einen Prozessor (17) angeschlossen sind, dem von einem Bedienungspult (18) ein Schwellenwert (PFL) eingegeben wird, daß die beiden Speicher (8, 9) über den Prozessor (17) an die Auswertungsschaltung (51) angeschlossen sind, welche einen weiteren Speicher

zur Durchführung des Kontrastvergleiches und einen Integrator (22) aufweist, dessen Ausgangssignale nach Vergleich mit dem Schwellenwert (PFL) in zwei Speichern (26, 27) gespeichert werden, daß die Transformationsschaltung (52) einen an den Prozessor (17) angeschlossenen weiteren Speicher (28) hat, der an einen Stufengenerator (37) und an einen Integrator (38) des Prozessors (17) angeschlossen ist, daß die Transformationsschaltung (52) einen weiteren Speicher (29) aufweist, der an Moduli (40, 41, 42) des Prozessors (17) angeschlossen ist und daß an den mit dem Stufengenerator (37) verbundenen Speicher (28) die Bilddarstellungseinrichtung (43), insbesondere ein Monitor, angeschlossen ist.

## Claims

1. Apparatus for obtaining tomographic X-ray images having improved contrast properties, comprising a X-ray-source (1) the radiation of which is received by means of a receiver (3) after having passed the object (2) and is converted by means of an image converter into electrical image signals of original images, which image signals correspond image element-wisely to the X-radiation received, and are conducted by means of an electronic circuit to an image display device, for example a monitor (43) or the like, mechanical means producing a tomographic relative movement between the receiver (3) and the X-ray source (1) during the radiation, characterized in that the electronic circuit has an analyzing circuit (51) for the contrast comparison repeated over a plurality of original images between image elements (for example A, B, C...) neighbouring each other and for statistical interception of the single contrast comparisons, the probability of occurence of contrasts of a certain sign between image elements neighbouring each other being determined in the analyzing circuit (51) by this statistical interception, and that a transformation circuit (52) is provided for amendment of the original image signals in dependence from the signals obtained from the analyzing circuit (51), by means of which transformation circuit (52) image element pairs are selected for further contrast rise, for which image element pairs the signs of the contrasts correspond to the signs of maximum probability, the output of the transformation circuit being connected to the image display device, for example to a monitor (43).

2. Apparatus according to claim 1, characterized in that the analyzing circuit (51) is adapted for the contrast comparison of many, preferably all, of the original images.

3. Apparatus according to claim 1 or 2, characterized in that the analyzing circuit (51) is adapted for the contrast comparison of image elements adjoining each other.

4. Apparatus according to any of the claims 1 to 3, characterized in that the analyzing circuit (51) has at least two memories (8, 9) for the separate storage and analysis of the original image signals which are produced during the tomographic movement in at least two sections of this movement crossing each other, preferably in two sections (X, Y) extending perpendicularly to each other.

5. Apparatus according to any of claims 1 to 4, characterized in that the analyzing circuit (51) comprises an integration stage (23) for the contrast comparisons of all images.

6. Apparatus according to any of claims 1 to 5, characterized in that the analyzing circuit (51) comprises also a threshold value stage (14) for considering a threshold value (PFL) for the statistical interception of the contrast comparisons, which threshold value preferably can be set on an operating desk (18).

7. Apparatus according to any of claims 1 to 6, characterized in that the analyzing circuit (51) has two memories (26, 27) which store the results of the statistical interception of the contrast comparisons, and that to these memories a further memory (28) of the transformation circuit (52) is associated, which further memory stores the transformed image element values groupwisely, which values have been calculated considering the results of the contrast comparisons.

8. Apparatus according to claim 7, characterized in that a step generator (37) is provided which increases the light level of the image elements of the original signals stepwisely by means of an integrator (38).

9. Apparatus according to any of claims 1 to 8, characterized in that a recording circuit (50) has two random access memories (8, 9) to which the digitalized original image signals are fed separated for two movement directions of the X-ray-source (1), said memories being connected to a processor (17) into which a threshold value (PFL) is set from an operating desk (18), that the two memories (8, 9) are connected via the processor (17) to the analyzing circuit (51) which comprises a further memory for performing the contrast comparison and an integrator (22), the output signals of which are stored in two memories (26, 27) after comparison with the threshold value (PFL), that the transformation circuit (52) comprises a further memory (28) connected to the processor (17), which further memory is connected to a step generator (37) and to an integrator (38) of the processor (17), that the transformation circuit (52) comprises a further memory (29) connected to moduli (40, 41, 42) of the processor (17) and that the image display device (43), particularly a monitor, is connected to the memory (28) connected to the step generator (37).

## Revendications

1. Dispositif pour l'obtention d'images radiographiques tomographiques à propriétés de contraste améliorées, comprenant une source de rayons X (1) dont le rayonnement, après avoir traversé l'objet (2), est capté par un récepteur (3) et converti au moyen d'un convertisseur d'images en signaux électriques d'images de départ, lesquels correspondent pour chaque point de l'image au rayonnement X reçu, et qui sont amenés par l'intermédiaire d'un circuit électrique à un dispositif de représentation de l'image, par exemple un moniteur (43) ou similaire, un mécanisme produisant pendant l'exposition aux rayons un déplacement relatif tomographique entre le récepteur (3) et la source de rayons X (1), caractérisé par le fait que le circuit électronique comprend un circuit d'exploitation (51) pour la comparaison du contraste, répétée sur plusieurs images de départ, entre des points de l'image voisins les uns des autres (par exemple A, B, C, ...) et pour l'exploitation statistique des diverses comparaisons de contraste, la probabilité de l'apparition de contrastes de signes déterminés entre des points de l'image voisins les uns des autres étant déterminée dans le circuit d'exploitation (51) grâce à cette exploitation statistique, et par le fait qu'il est prévu un circuit de transformation (52) pour modifier les signaux des images de départ en fonction des signaux fournis par le circuit d'exploitation (51), circuit de transformation (52) au moyen duquel sont choisies des paires de points de l'image pour une autre augmentation du contraste pour laquelle le signe du contraste correspond au signe de plus grande probabilité, la sortie du circuit de transformation étant reliée au dispositif de représentation de l'image, par exemple un moniteur (43).

2. Dispositif selon la revendication 1, caractérisé par le fait que le circuit d'exploitation (51) est agencé pour la comparaison du contraste de nombreuses images de départ, et de préférence de toutes.

3. Dispositif selon la revendication 1 ou 2, caractérisé par le fait que le circuit d'exploitation (51) est agencé pour la comparaison du contraste de points de l'image contigus l'un à l'autre.

4. Dispositif selon l'une des revendications 1 à 3, caractérisé par le fait que le circuit d'exploitation (51) comprend au moins deux mémoires (8, 9) pour enregistrer et exploiter séparément les signaux d'image d'origine qui sont engendrés au cours du déplacement tomographique selon au moins deux sections qui se croisent, de préférence selon deux sections (X, Y) qui sont perpendiculaires l'une à l'autre.

5. Dispositif selon l'une des revendications 1 à 4, caractérisé par le fait que le circuit d'exploitation (51) contient un étage intégrateur (23) pour les comparaisons des contrastes de toutes les images.

6. Dispositif selon l'une des revendications 1 à 5, caractérisé par le fait que le circuit d'exploitation (51) comprend aussi un étage de valeur seuil (14) en vue de prendre en considération une valeur seuil (PFL) qui est destinée à l'évaluation statistique des comparaisons des contrastes, et qui est de préférence réglable sur un pupitre de commande (18).

7. Dispositif selon l'une des revendications 1 à 6, caractérisé par le fait que le circuit d'exploitation (51) comprend deux mémoires (26, 27) qui enregistrent les résultats de l'exploitation statistique des comparaisons de contraste, et par le fait qu'est associée à celles-ci une autre mémoire (28) du circuit de transformation (52) qui enregistre par groupes les valeurs transformées des points d'image qui sont calculées en prenant en considération les résultats des comparaisons des contrastes.

8. Dispositif selon la revendication 7, caractérisé par le fait qu'il est prévu un générateur d'étage (37) qui, à l'aide d'un intégrateur (38), augmente graduellement le niveau de luminosité des points d'image des signaux de départ.

9. Dispositif selon l'une des revendications 1 à 8, caractérisé par le fait qu'un circuit d'enregistrement (50) comprend deux mémoires à accès direct (8, 9) auxquelles sont amenés séparément les signaux des images de départ numérisés selon deux directions de déplacement de la source de rayons X (1), et qui sont reliées à un processeur (17) auquel une valeur seuil (PFL) est amenée par un pupitre de commande (18), par le fait que les deux mémoires (8, 9) sont reliées par l'intermédiaire du processeur (17) au circuit d'exploitation (51) qui comprend une autre mémoire pour réaliser la comparaison des contrastes et un intégrateur (22) dont les signaux de départ, après comparaison avec la valeur seuil (PFL), sont enregistrés dans deux mémoires (26, 27), par le fait que le circuit de transformation (52) comprend une autre mémoire (28) qui est reliée au processeur (17) et qui est reliée à un générateur d'étage (37) et à un intégrateur (38) du processeur (17), par le fait que le circuit de transformation (52) comprend une autre mémoire (29) qui est reliée à des modules (40, 41, 42) du processeur (17), et par le fait que le dispositif de représentation de l'image (43), en particulier un moniteur, est relié à la mémoire (28) qui est reliée au générateur d'étage (37).

FIG. 1

FIG. 2

SYNC

FIG. 3

FIG. 4

FIG. 5

FIG. 6

FIG. 7

EP 0 290 447 B1

FIG. 8

FIG. 9

FIG. 10

FIG. 11

FIG. 12

FIG. 13

FIG. 14.

R = S
S = W
R > T
T > W

5